(19) Europäisches Patentamt
European Patent Office
Office européen des brevets

(11) **EP 4 571 431 A1**

(12) **EUROPEAN PATENT APPLICATION**
published in accordance with Art. 153(4) EPC

(43) Date of publication:
**18.06.2025 Bulletin 2025/25**

(21) Application number: **23852541.4**

(22) Date of filing: **07.08.2023**

(51) International Patent Classification (IPC):
*G05B 11/36* (2006.01)    *G05D 1/20* (2024.01)
*G08G 1/16* (2006.01)

(52) Cooperative Patent Classification (CPC):
**G05B 11/36; G05D 1/43; G08G 1/16**

(86) International application number:
**PCT/JP2023/028799**

(87) International publication number:
**WO 2024/034579 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022  JP 2022126401**

(71) Applicant: **KAWASAKI JUKOGYO KABUSHIKI
KAISHA**
**Kobe-shi, Hyogo 650-8670 (JP)**

(72) Inventors:
• **OTSUKI, Satoshi**
  **Kobe-shi, Hyogo 650-8670 (JP)**
• **NAKASHIMA, Kenichi**
  **Kobe-shi, Hyogo 650-8670 (JP)**

(74) Representative: **Arnold & Siedsma**
  **Bezuidenhoutseweg 57**
  **2594 AC The Hague (NL)**

(54) **CONTROL DEVICE**

(57)    A controller 100 that calculates an operation quantity of an actuator 12 to move a mover 1 includes: a setter 22 that sets an instruction value to move the mover 1 to a target position; a restrictor 25 that sets a constraint condition of an instruction value for avoidance of an obstacle; a corrector 26 that corrects the instruction value to fall within a restricted range defined by the constraint condition if the instruction value is out of the restricted range; and an operation quantity calculator 28 that calculates the operation quantity based on the instruction value.

FIG. 5

EP 4 571 431 A1

# EP 4 571 431 A1

**Description**

FIELD

The technique disclosed here relates to a controller.

BACKGROUND

In the field of generating a route of a mover, a technique of performing autonomous driving by generating a route avoiding collision between a mover and obstacles has been known to date. Patent Document 1, for example, discloses a technique of calculating an optimum route by assuming a route connecting nodes by straight lines and moving the nodes to avoid obstacles.

CITATION LIST

PATENT DOCUMENT

Patent Document 1: U.S. Patent No. 11161501

SUMMARY

In autonomous driving that avoids obstacles as described above, future target positions and optimum chronological operation quantities that avoid collision against obstacles are sequentially calculated. Such calculations are complex and impose a large calculational load. Consequently, instantaneous calculations are difficult, and it is difficult to respond immediately to suddenly appearing obstacles or obstacles with abrupt movements.
It is therefore an object of the technique disclosed here to avoid obstacles by immediately responding to obstacles.
The technique according to the present disclosure is directed to a controller that calculates an operation quantity of an actuator to move a mover. The controller includes: a setter that sets an instruction value to move the mover to a target position; a restrictor that sets a constraint condition of the instruction value for avoidance of an obstacle; a corrector that corrects the instruction value to fall within a restricted range defined by the constraint condition in a case where the instruction value is out of the restricted range; and an operation quantity calculator that calculates the operation quantity based on the instruction value.
The controller can avoid obstacles by responding immediately to obstacles.

BRIEF DESCRIPTION OF THE DRAWINGS

[FIG. 1] FIG. 1 is a schematic diagram of a driving assistance system.
[FIG. 2] FIG. 2 shows a schematic hardware configuration of a mover.
[FIG. 3] FIG. 3 shows a hardware configuration of a controller.
[FIG. 4] FIG. 4 is a functional block diagram of a processor.
[FIG. 5] FIG. 5 is a detailed functional block diagram of a control calculator.
[FIG. 6] FIG. 6 is an image illustrating an example of correction of an instruction value by a corrector.
[FIG. 7] FIG. 7 is an image illustrating an example of correction of an operation quantity by the corrector without consideration of a constraint condition concerning output characteristics.
[FIG. 8] FIG. 8 is an image illustrating an example of correction of an operation quantity by the corrector in consideration of a constraint condition concerning output characteristics.
[FIG. 9] FIG. 9 is an image illustrating an example of correction of an instruction value by the corrector in the case of including a fixed constraint condition and a variable constraint condition.
[FIG. 10] FIG. 10 is an image illustrating an example of correction of an instruction value by the corrector in the case of changing a constraint condition at occurrence of a deadlock.
[FIG. 11] FIG. 11 is an image illustrating an example of correction of an instruction value by the corrector in the case of performing preliminary correction at occurrence of a deadlock.
[FIG. 12] FIG. 12 is a flowchart of a restriction process of an instruction value.
[FIG. 13] FIG. 13 is an illustration of a ship model.
[FIG. 14] FIG. 14 is an illustration of a vehicle model.

[FIG. 15] FIG. 15 is a detailed functional block diagram of a control calculator according to another embodiment.

DESCRIPTION OF EMBODIMENTS

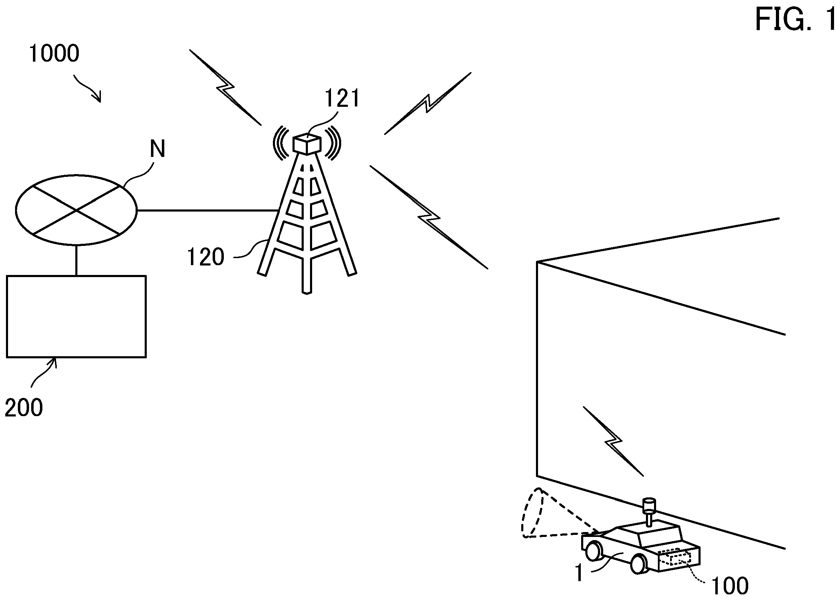

An exemplary embodiment will be described in detail hereinafter with reference to the drawings. FIG. 1 is a schematic diagram of a driving assistance system 1000. The controller 100 is mounted on a mover 1 and performs autonomous driving of the mover 1. The mover 1 is included in the driving assistance system 1000. The driving assistance system 1000 may include movers 1. The driving assistance system 1000 includes an assist 200 that assists autonomous driving, in addition to the mover 1. The assist 200 is communicably connected to the mover 1. The assist 200 transmits map information that assists driving of the mover 1, to the mover 1. The controller 100 generates a route based on the map information, and performs autonomous driving. The assist 200 and the mover 1 communicate with each other through a relay 121. The relay 121 is installed in, for example, a control tower 120. The assist 200 is connected to the relay 121 through a communication network N such as the Internet. The relay 121 and the mover 1 wirelessly communicate with each other.

The map information includes geographical information. The geographical information includes at least one of roads, pathways, fairways, or planimetric features (e.g., buildings, trees, and rocks, whether natural or artificial, located on land or at sea). The geographical information is information on general maps such as road maps, facility maps, and fairway maps. The map information may include obstacle information, as well as the geographical information. The obstacle information includes at least one of positions, velocities, or types of obstacles.

-Mover-

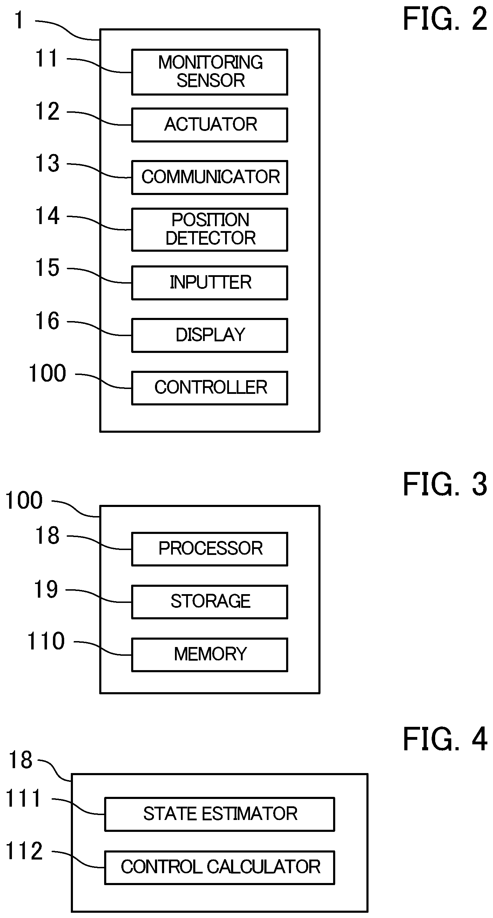

The mover 1 is, for example, a vehicle. The mover 1 may be a ship or an autonomous robot. FIG. 2 shows a schematic hardware configuration of the mover 1. The mover 1 includes a monitoring sensor 11, an actuator 12, a communicator 13, a position detector 14, an inputter 15, a display 16, an alarm 17, and a controller 100.

The monitoring sensor 11 acquires monitoring information in a predetermined range in an environment in which the mover 1 moves. The monitoring information can include geographic features, buildings, planimetric features, facilities, or movers. The monitoring sensor includes at least one of a camera, a light detection and ranging (LiDAR) sensor, an infrared sensor, a laser range finder, or a Doppler LiDAR sensor. For example, the camera captures still images or videos. The laser range finder may employ a green laser. In this example, the monitoring sensor 11 is a LiDAR sensor. The monitoring sensor 11 acquires point group data of objects in a predetermined monitoring area as monitoring information.

The actuator 12 is a driving source of the mover 1. The actuator 12 may include a first actuator 12A and a second actuator 12B. In a case where the mover 1 is a vehicle, for example, the first actuator 12A is an electric motor or an engine, and the second actuator 12B is a steering device (specifically an electric motor for adjusting a steering angle).

The communicator 13 wirelessly communicates with an external device. The position detector 14 detects a position of the mover 1. For example, the position detector 14 is a global navigation satellite system (GNSS) receiver or an inertial measurement unit (IMU). The inputter 15 is a device with which a user inputs various types of information. In the case where the mover 1 is a vehicle, for example, the inputter 15 is a touch panel of a car navigation system. In the case where the mover 1 is a vehicle, the display 16 is, for example, a display of a car navigation system. The display 16 may display a map or a route generated from map information. The alarm 17 is a buzzer or a lamp. The alarm 17 emits sound or light in response to an instruction from the controller 100.

FIG. 3 shows a hardware configuration of the controller 100. The controller 100 controls the entire mover 1. The controller 100 performs autonomous driving of the mover 1. That is, the controller 100 operates the actuator 12 to move the mover 1. The controller 100 includes a processor 18, a storage 19, and a memory 110.

The processor 18 performs various calculations. For example, the processor 18 is a processor such as a central processing unit (CPU). The processor 18 may be a micro controller unit (MCU), a micro processor unit (MPU), a field programmable gate array (FPGA), a programmable logic controller (PLC), system LSI, or the like.

The storage 19 stores programs and various types of data to be executed by the processor 18. For example, the storage 19 stores a control program. The storage 19 is a nonvolatile memory, a hard disc drive (HDD), or a solid state drive (SSD), for example. The memory 110 temporarily stores data or other information. For example, the memory 110 is a volatile memory.

The processor 18 operates the actuator 12 to thereby cause the mover 1 to perform autonomous driving. The processor 18 generates a route based on map information. The processor 18 operates the actuator 12 based on detection results by the monitoring sensor 11 and the position detector 14 such that the mover 1 moves along the generated route. At this time, the processor 18 operates the actuator 12 to avoid interference between the mover 1 and obstacles.

FIG. 4 is a functional block diagram of the processor 18. The processor 18 reads programs from the storage 19 and develops the programs to the memory 110 to thereby perform various functions. Specifically, the processor 18 serves as a state estimator 111 that estimates a state of the mover 1 and a state of an environment, and a control calculator 112 that calculates an instruction operation quantity of the actuator 12.

The state estimator 111 receives map information, a detection result of the monitoring sensor 11, and a detection result of the position detector 14. For example, the state estimator 111 estimates the state of the mover 1 using a Kalman filter. The state estimator 111 also estimates a state of obstacles in the environment. The state estimator 111 may perform self-position estimation and environment map generation using a simultaneous localization and mapping (SLAM). The state estimator 111 outputs map information including positions of obstacles and others, mover information such as a current position and velocity of the mover 1, obstacle information such as relative positions and velocities of obstacles relative to the mover 1, and disturbance information.

It should be noted that examples of the obstacles include planimetric features, buildings, movers other than the mover 1, construction sites, rough terrains, shallow waters, and aquaculture farms.

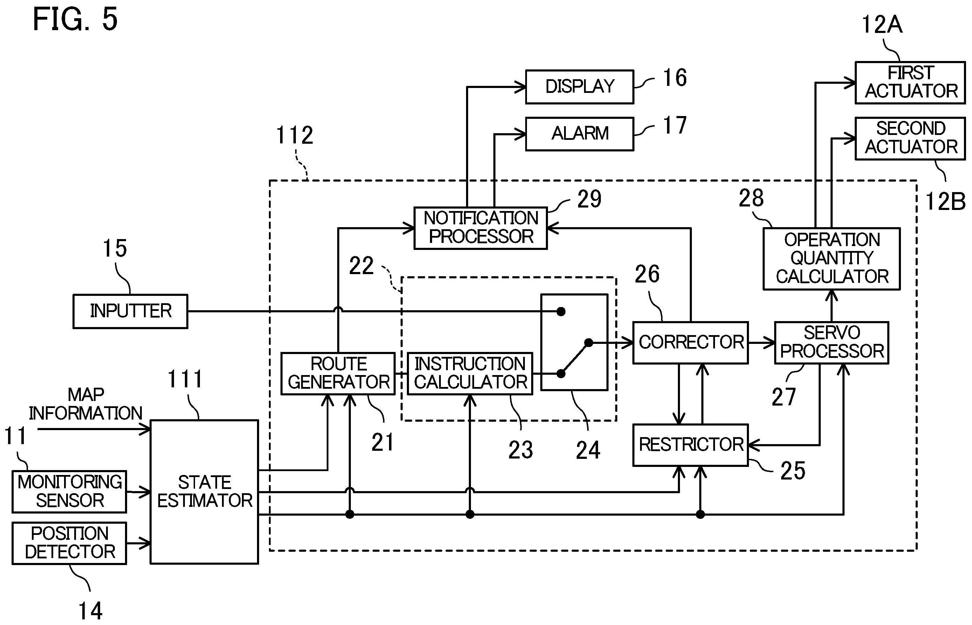

FIG. 5 is a detailed functional block diagram of the control calculator 112. The control calculator 112 includes a route generator 21 that generates a route of the mover 1, a setter 22 that sets an instruction velocity of the mover 1, a restrictor 25 that sets a constraint condition of the instruction velocity, a corrector 26 that corrects the instruction velocity, a servo processor 27 that calculates an instruction force to cause an actual velocity of the mover 1 to follow the instruction velocity, an operation quantity calculator 28 that calculates an operation quantity of the actuator 12 based on the instruction force, and a notification processor 29 that notifies a user of correction of the instruction velocity through the display 16 or the alarm 17.

The route generator 21 reads a destination stored in the storage 19. The storage 19 stores the destination beforehand. The storage 19 also stores a transit point in some cases. In this case, the route generator 21 reads the transit point from the storage 19. The route generator 21 receives map information and mover information from the state estimator 111.

The route generator 21 generates a route from a current position of the mover 1 to the destination based on the map information. The route generator 21 refers to the map information and generates a route that does not collide with planimetric features and other obstacles. In a case where a road, a pathway, or a fairway is set in the environment, the route generator 21 generates a route along the road, the pathway, or the fairway. For example, the route generator 21 generates a route by using an A-star search algorithm or an RRT-star algorithm. The route generator 21 sets a way point on the route, that is, a target position relatively close to the current position on the route, and outputs the target position to an instruction calculator 23.

The setter 22 sets one of an instruction velocity calculated based on the route or an instruction velocity input through the inputter 15, as an instruction velocity. Specifically, the setter 22 includes the instruction calculator 23 that calculates an instruction velocity based on the route generated by the route generator 21, and a switch 24 that switches an instruction velocity to be output between the instruction velocity form the inputter 15 and the instruction velocity from the instruction calculator 23. The instruction velocity from the inputter 15 is an instruction velocity input by manual operation of the user.

The instruction calculator 23 receives mover information and disturbance information from the state estimator 111. The instruction calculator 23 calculates an instruction velocity for allowing the mover 1 to move to the target position (i.e., way point). For example, the instruction calculator 23 calculates an instruction velocity by PID control. That is, the instruction calculator 23 calculates an instruction velocity based on a difference between the current position of the mover 1 and the target position.

Alternatively, the instruction calculator 23 may calculate an instruction velocity by model predictive control (MPC). Assuming that the route generated by the route generator 21 is a basic route, in model predictive control, the instruction calculator 23 generates a local route included in the basic route and calculates an instruction velocity in moving along the local route. The local route is a route from the current position of the mover 1 to a target position. The instruction calculator 23 predicts state quantities of the mover 1 and obstacles from current state quantities of the mover 1 and obstacles, and calculates an optimum route from the current position of the mover 1 to the target position and an instruction velocity for the optimum route. In this case, the instruction calculator 23 also receives obstacle information from the state estimator 111.

The switch 24 switches the instruction velocity to be input to the corrector 26 between the instruction velocity from the inputter 15 and the instruction velocity from the instruction calculator 23. During autonomous driving, the switch 24 basically inputs the instruction velocity from the instruction calculator 23 to the corrector 26. On the other hand, in the case of inputting the instruction velocity from the inputter 15 by manual operation, the switch 24 inputs the instruction velocity from the inputter 15 to the corrector 26.

The restrictor 25 sets a constraint condition for restricting an instruction velocity. Specifically, the restrictor 25 receives mover information, obstacle information, and disturbance information from the state estimator 111. The restrictor 25 sets a constraint condition of the instruction velocity for allowing the mover 1 to avoid obstacles. For example, the restrictor 25 sets a constraint condition by using a kinematic model of the mover 1. Specifically, the restrictor 25 sets a constraint condition of the instruction velocity to keep a predetermined distance (hereinafter referred to as a "safety distance") between the mover 1 and obstacles.

The restrictor 25 can set multiple constraint conditions. For example, if there are multiple obstacles for which avoidance needs to be considered at the same time, the restrictor 25 can set multiple constraint conditions corresponding to the individual obstacles. In addition, if the mover 1 includes multiple protected portions for which avoidance needs to be considered at the same time, the restrictor 25 can set multiple constraint conditions corresponding to the individual protected portions. Thus, in the case where multiple obstacles and multiple protected portions need to be considered, constraint conditions in a number corresponding to combinations of obstacles and protected portions can be set.

In addition to avoidances of obstacles, the restrictor 25 sets a constraint condition concerning output characteristics with respect to the instruction velocity. For example, the restrictor 25 sets a constraint conditions concerning control characteristics of the servo processor 27. Thus, the restrictor 25 also receives a control state quantity from the servo processor 27. Further, in addition to avoidance of obstacles, the restrictor 25 sets a constraint condition concerning the actuator 12. The constraint condition concerning control characteristics and the constraint condition concerning the actuator 12 are an example of a constraint condition concerning output characteristics.

The restrictor 25 sequentially calculates a constraint condition and updates the constraint condition. That is, states of the mover 1 and obstacles can change with time. The restrictor 25 can update the constraint condition in accordance with the change with time in the states of the mover 1 and obstacles. The restrictor 25 outputs the constraint condition to the corrector 26.

The restrictor 25 may set an adjustable constraint condition. For example, a constraint condition that can be alleviated based on at least one of protected portions of the mover 1 or the type of obstacles may be set to be adjustable. In a case where the instruction velocity is not appropriately corrected, the restrictor 25 changes the adjustable constraint condition.

The corrector 26 compares the restricted range defined by the constraint condition with the instruction velocity to thereby determine a final instruction velocity. Specifically, if the instruction velocity is within the restricted range, the corrector 26 determines the instruction velocity as the final instruction velocity without change. If the instruction velocity is out of the restricted range, the corrector 26 corrects the instruction velocity to fall within the restricted range and determines the instruction velocity as the final instruction velocity. The restricted range is not composed of a finite number of options, such as only several options, and has a continuous width, that is, extent. In other words, the corrector 26 corrects the instruction velocity to an appropriate velocity within a range having a continuous extent. For example, the corrector 26 optimizes the instruction velocity to fall within the restricted range by using quadratic programming or other methods. The corrector 26 outputs the final instruction velocity to the servo processor 27.

The servo processor 27 receives mover information and disturbance information from the state estimator 111. The servo processor 27 calculates an instruction force that causes an actual velocity of the mover 1 to follow the instruction velocity. The servo processor 27 performs PID control, for example. It should be noted that control of the servo processor 27 is not limited to PID control and may be robust control or other control. The servo processor 27 outputs the instruction force to the operation quantity calculator 28.

The operation quantity calculator 28 distributes the instruction force to the actuators 12, and calculates an instruction operation quantity of each of the actuators 12. In a case where each actuator 12 is an electric motor, the operation quantity is a rotation velocity or a torque of the electric motor, for example. In a case where each actuator 12 is an engine, the operation quantity is an accelerator opening angle and a fuel injection quantity.

Each actuator 12 operates in accordance with the instruction operation quantity. The actuator 12 can include a dedicated processor for operating the actuator 12. For example, in the case where the actuator 12 is an electric motor, the actuator 12 further includes a servo amplifier. In this case, the servo amplifier operates the electric motor in accordance with the instruction operation quantity. As a result, the mover 1 exhibits a thrust and moves toward the target position.

The notification processor 29 receives the route and the target position from the route generator 21. The notification processor 29 also receives a final instruction velocity u and information on whether correction has been performed or not from the corrector 26. The notification processor 29 notifies the user that the instruction velocity is to be corrected through the display 16 and the alarm 17.

Specifically, the notification processor 29 causes the display 16 to display the route, the target position, and the final instruction velocity u. For example, the display 16 displays the map on which the route and the target position are superimposed, and displays the final instruction velocity u as a vector. At this time, the display 16 changes a display mode of the final instruction velocity u depending on whether the instruction velocity has been corrected or not. Accordingly, the user is allowed to know the progress status of the mover 1 and whether the instruction velocity has been corrected or not. It should be noted that the display 16 may display the presence of correction of the instruction velocity, such as "being corrected" or "restricted." In this case, the display 16 does not need to change the display mode of the final instruction velocity u.

In addition, in the case of correcting the instruction velocity, the notification processor 29 outputs an instruction for notifying of correction of the instruction velocity to the alarm 17. The alarm 17 issues an alert depending on an instruction. For example, the alarm 17 emits sound or light as an alert. Accordingly, a user is allowed to know that the instruction velocity is corrected.

It should be noted that the notification processor 29 may notify the user of correction of the instruction velocity through one of the display 16 or the alarm 17.

-Constraint Condition and Restricted Range-

Next, the constraint condition and the restricted range will be described in detail.

The restrictor 25 and the corrector 26 restrict an instruction velocity by using a control barrier function (CBF). Specifically, the instruction velocity is restricted based on an evaluation function J shown in Equation (1) and a constraint condition shown in Equation (2).

$$J = \left( \boldsymbol{u}_{ref} - \boldsymbol{u} \right)^T W \left( \boldsymbol{u}_{ref} - \boldsymbol{u} \right) \qquad (1)$$

$$\dot{h}_i \left( \boldsymbol{x}, \boldsymbol{x}_j, \boldsymbol{u} \right) \geq -\alpha \left( h_i \left( \boldsymbol{x}, \boldsymbol{x}_j, \boldsymbol{u} \right) \right) \quad i = 1, \cdots, n \qquad (2)$$

where an $\boldsymbol{u}_{ref}$ is an input instruction value, that is, a control input. That is, the input instruction value $u_{ref}$ is a provisional instruction value before correction, u is a corrected instruction value, x is a current state quantity of a control target (mover 1 in this example), $x_j$ is a current state quantity of an obstacle, $\alpha$ is a functional (class $\kappa$ function), $h_i$ is a Barrier function shown in Equation (3) below, and i is a number for identifying a constraint condition. For example, $h_i$ is an i-th Barrier function.

$$h_i \left( \boldsymbol{x}, \boldsymbol{x}_j, \boldsymbol{u} \right) \in \mathbb{R} \qquad \cdots \ (\,3\,)$$

The Barrier function $h_i$ is a function representing a safety state. The Barrier function $h_i$ is set such that if $h_i$ satisfies $\geq 0$, the control target becomes safe. Equation (2) is an inequality constraint condition for converging the control target into the range of $h_i \geq 0$.

As expressed by Equation (4), an equation of motion for the mover 1 often takes an affine form with respect to an instruction value u, and thus, the constraint condition can be converted to a linear equation such as Equation (5). The restrictor 25 sets a constraint condition as expressed by Equation (6).

$$\dot{\boldsymbol{x}} = f(\boldsymbol{x}) + g(\boldsymbol{x})\boldsymbol{u} \qquad \cdots \ (\,4\,)$$

$$\dot{h}_i \left( \boldsymbol{x}, \boldsymbol{x}_j, \boldsymbol{u} \right) = \frac{\partial h_i^T}{\partial x} f(\boldsymbol{x}) + \frac{\partial h_i^T}{\partial x} g(\boldsymbol{x})\boldsymbol{u} \geq -\alpha(h_i) \qquad \cdots \ (\,5\,)$$

$$A\boldsymbol{u} - b \geq 0, A = \frac{\partial h_i^T}{\partial x} g(\boldsymbol{x}), b = -\frac{\partial h_i^T}{\partial x} f(\boldsymbol{x}) - \alpha(h_i) \qquad \cdots \ (\,6\,)$$

The corrector 26 obtains an instruction value u which satisfies the constraint condition and minimizes the evaluation function J. Consequently, the corrector 26 obtains the instruction value u with which the change amount from the input instruction value $u_{ref}$ is at minimum and the constraint condition is satisfied. For example, the corrector 26 obtains an instruction value u by a convex optimization calculation method, such as an interior-point method or quadratic programming. The corrector 26 corrects the input instruction value $u_{ref}$ to the instruction value u and outputs the instruction value u as a final instruction value u. It should be noted that if the input instruction value $u_{ref}$ is within the restricted range, the evaluation function J is zero. That is, the corrector 26 determines whether the input instruction value $u_{ref}$ is within the restricted range or not based on whether the evaluation function J is zero or not. If the input instruction value $u_{ref}$ is within the restricted range, the corrector 26 outputs the input instruction value $u_{ref}$ without change as the final instruction value u.

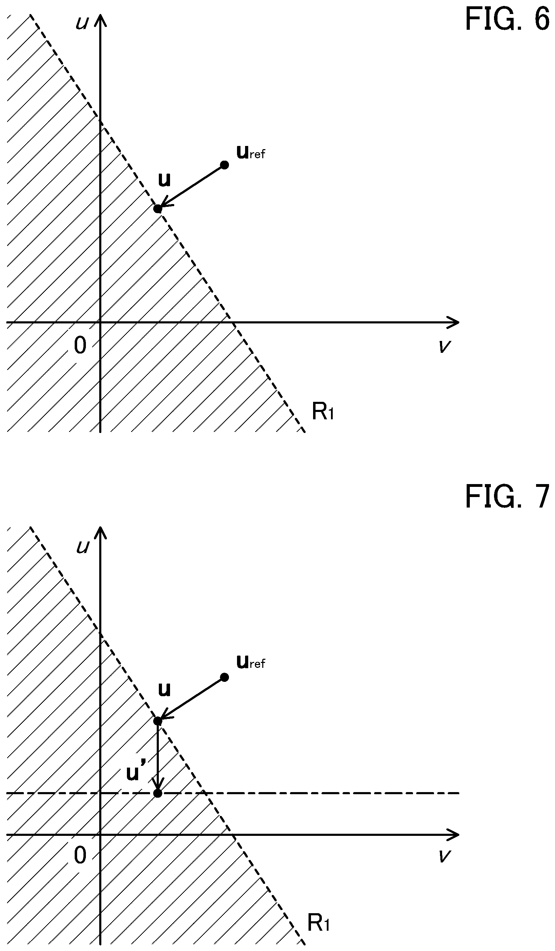

FIG. 6 is an image illustrating an example of correction of an instruction value u by the corrector 26. In this example, the instruction value u is an instruction velocity and expressed by a vector (u, v) in a coordinate system including orthogonal X and Y axes. The hatched region is a restricted range satisfying the constraint condition. The broken line indicates a constraint condition R1 and serves as a boundary of the restricted range. If the input instruction velocity $u_{ref}$ input to the corrector 26 is out of the restricted range, the corrector 26 obtains a final instruction velocity u which is included in the restricted range and has a minimum change amount from the input instruction velocity $u_{ref}$. As shown in FIG. 6, the point on a boundary B nearest to the input instruction velocity $u_{ref}$ is the final instruction velocity u.

In this manner, the corrector 26 corrects the input instruction velocity $u_{ref}$ to the final instruction velocity u included in the restricted range. By restricting the final instruction velocity u within the restricted range, the mover 1 as a control target can be maintained with safety. The safety is defined by the Barrier function $h_i$.

The calculation of the constraint condition and the calculation for correcting the instruction value u to fall within the restricted range described above have a smaller calculation load than a calculation of setting a target position again and a calculation of setting a route (including a local route) again. Thus, the restrictor 25 and the corrector 26 can quickly obtain an optimum final instruction value u. For example, if an obstacle suddenly appears near the mover 1 or an obstacle moves rapidly, the restrictor 25 and the corrector 26 immediately obtain an optimum final instruction value u and enables the mover 1 to avoid interference with the obstacle immediately.

=Additional Constraint=

The constraint condition in the foregoing description is a constraint condition for enabling the mover 1 to avoid obstacles and is a constraint condition concerning safety. In addition to the constraint condition concerning safety, the restrictor 25 may consider a constraint condition other than safety. Examples of the constraint condition other than safety include constraint conditions concerning output characteristics such as a constraint condition concerning control characteristics and a constraint condition concerning actuator characteristics. The instruction force output from the servo processor 27 can be subjected to a constraint condition concerning control characteristics of the servo processor 27. Alternatively, a constraint can be intentionally set for control characteristics of the servo processor 27, such as a case where an upper limit is set for the instruction force to prevent excessive acceleration of the mover 1. In addition, the actuator 12 has characteristics such as a maximum output. The restrictor 25 may consider at least one of these constraint conditions other than safety.

First, the constraint condition concerning control characteristics will be described. The instruction force output from the servo processor 27 is affected, that is, constrained, by control characteristics such as responsiveness and followability of the servo processor 27. A transfer function of the servo processor 27 represents control characteristics of the servo processor 27. Based on an inverse transfer function of the servo processor 27, the restrictor 25 converts the constraint condition concerning control characteristics to a constraint condition on an instruction velocity. Specifically, the restrictor 25 receives a state quantity of the servo processor 27. Based on the state quantity of the servo processor 27, the restrictor 25 obtains an inverse transfer function of the servo processor 27. The restrictor 25 obtains a constraint condition concerning control characteristics with respect to the instruction velocity, by using the inverse transfer function.

Next, a constraint condition concerning actuator characteristics will be described. A range, that is, a limit, of a thrust exhibited by the actuator 12 as a whole is determined by actuator characteristics such as layout of the actuator 12, an output upper limit of the actuator 12, an output lower limit of the actuator 12, and distribution logic of the operation quantity calculator 28. Thus, the limit of the thrust exhibited by the actuator 12 is obtained beforehand based on actuator characteristics such as layout of the actuator 12 and other characteristics, and stored in the storage 19. The limit of the thrust by the actuator 12 can be considered as a constraint on an instruction force output from the servo processor 27 to the operation quantity calculator 28. As described above, the constraint on the instruction force can be converted to a constraint condition with respect to an instruction velocity by using the inverse transfer function of the servo processor 27. That is, the limit of the thrust by the actuator 12 can be converted to a constraint condition with respect to the instruction velocity. The restrictor 25 obtains a constraint condition concerning actuator characteristics with respect to the instruction velocity by using the inverse transfer function of the servo processor 27 from the limit of the thrust by the actuator 12 stored in the storage 19.

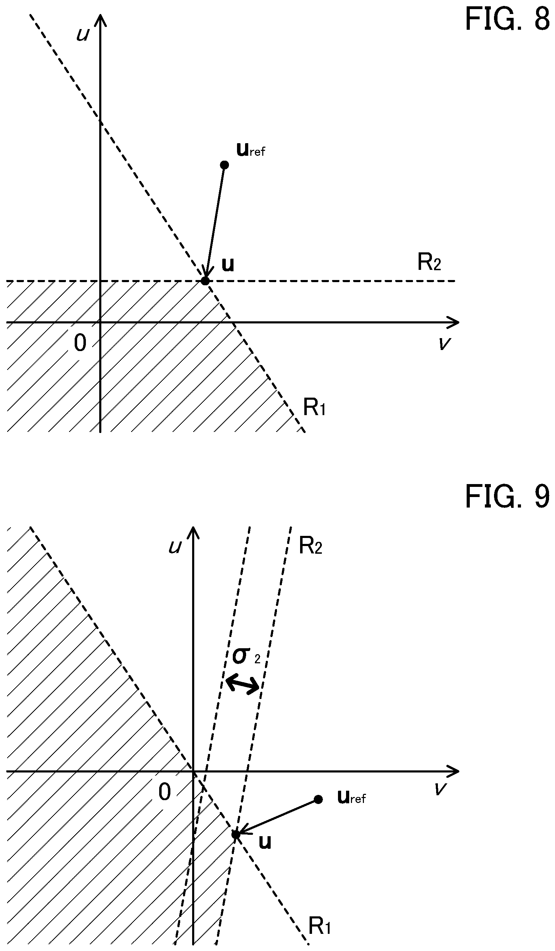

In the case of considering both a constraint concerning control characteristics and a constraint condition concerning actuator characteristics, the restrictor 25 combines both the constraint conditions to obtain a constraint condition concerning output characteristics. FIG. 7 is an image illustrating an example of correction of an instruction value u by the corrector 26 without consideration of a constraint condition concerning output characteristics. FIG. 8 is an image illustrating an example of correction of an instruction value u by the corrector 26 in consideration of a constraint condition concerning output characteristics. In FIG. 7, the hatched region is a restricted range, and the broken line indicates a constraint condition R1 and serves as a boundary of the restricted range. The chain line is a constraint of an instruction value corresponding to a constraint concerning output characteristics. In FIG. 8, the hatched region is a restricted range, and the broken line indicates constraint conditions R1 and R2 and serves as a boundary of the restricted range. The constraint condition R1 is a constraint condition concerning safety, and the constraint condition R2 is a constraint condition concerning output characteristics.

In the case of considering no constraint condition concerning output characteristics, the corrector 26 corrects the input instruction velocity $u_{ref}$ based on only the constraint condition concerning safety R1. The final instruction velocity u is located on the constraint condition R1, that is, on the boundary of the constraint condition. Thereafter, the servo processor 27 calculates an instruction force based on the final instruction velocity u, and the operation quantity calculator 28 calculates instruction operation quantities of the first actuator 12A and the second actuator 12B based on the instruction force. At this time, the instruction force is affected by control characteristics of the servo processor 27. A total thrust by the actuator 12 is affected by actuator characteristics of the first actuator 12A and the second actuator 12B. As a result, a thrust applied to the mover 1 is not a thrust appropriately corresponding to the final instruction velocity u, but a thrust affected by constraint concerning control characteristics and constraint concerning actuator characteristics. If such a constraint on the thrust is converted to a constraint on the instruction velocity u, this constraint is expressed as the chain line in FIG. 7. That is, a thrust equal to a thrust further corrected such that the instruction velocity u satisfies the constraint of the chain line is exhibited. In the example of FIG. 7, a substantial instruction velocity u' is shifted from the constraint condition R1 inward in the restricted range. This means driving at a more safety operating point, and this driving can be assumed to be driving with an instruction velocity u restricted more than necessary.

On the other hand, in the case of considering a constraint condition concerning output characteristics, as illustrated in FIG. 8, the restrictor 25 sets both the constraint condition concerning safety R1 and the constraint condition concerning output characteristics R2. The corrector 26 corrects the input instruction velocity $u_{ref}$ to fall within the restricted range defined by the constraint conditions R1 and R2. As a result, the corrector 26 corrects the input instruction velocity $u_{ref}$ to a point closest to the input instruction velocity $u_{ref}$ on the boundary of the restricted range. In this example, the input instruction velocity $u_{ref}$ is corrected to an intersection point between the constraint condition R1 and the constraint condition R2. As compared to FIG. 7, a velocity in the u-axis direction is the same as FIG. 7, but a velocity in the v-axis direction increases. Consequently, the mover 1 exhibits a maximum thrust within the constraint concerning output characteristics while maintaining safety.

=Variable Constraint Condition=

The restrictor 25 can set an adjustable, that is, variable, constraint condition. For example, obstacles include those that are passable but preferably avoided, such as rough terrains or areas with turbulent airflow. The restrictor 25 may switch the constraint condition between variable and fixed, depending on the type of an obstacle as a target of a constraint condition. To the passable obstacle, the restrictor 25 may be set the constraint condition adjustable, that is, alleviatable. For example, if the constraint condition is strict, no instruction value u can be included within the restricted range or an extremely small instruction value u is included within the restricted range in some cases. This makes it difficult to move the mover 1 appropriately. In such a case, the restrictor 25 alleviates the variable constraint condition to enlarge the restricted range. As a result, it is possible to set the instruction value u included within the restricted range or the instruction value u included within the restricted range can increase.

In another case of setting the constraint condition to keep a safety distance between protected portions and obstacles, the restrictor 25 may set the constraint condition to be adjustable, that is, to be alleviatable, to reduce the safety distance. The safety distance is set by adding a margin to a required minimum distance to ensure avoidance of interference between protected portions and obstacles. The restrictor 25 may set the constraint condition to be adjustable within a range corresponding to the margin in the safety distance. For example, in a case where protected portions are set in the mover 1 and assigned with priority for protection, the restrictor 25 may allow the constraint condition corresponding to a protected portion with a relatively low priority to be variable. Specifically, in a case where the protected portions include a first protected portion and a second protected portion with lower priority than the first protected portion, the restrictor 25 may fix the constraint condition corresponding to the first protected portion and allow the constraint condition corresponding to the second protected portion to be variable. Alternatively, the restrictor 25 may allow constraint conditions corresponding to protected portions to be variable and sequentially alleviate the constraint conditions in the ascending order of priority until an appropriate instruction value u is set.

For the variable constraint condition, the restrictor 25 introduces a slack variable $\sigma_i$ as expressed by Equation (7):

$$A_i \boldsymbol{u} - b_i + \sigma_i \geq 0 \qquad \cdots \quad (7)$$

In this case, the restrictor 25 outputs the constraint condition including the slack variable to the corrector 26. The corrector 26 sets the evaluation function J as Equation (8) and adjusts the weight of the slack variable $\sigma_i$. Since the fixed constraint condition includes no slack variable $\sigma_i$, the corrector 26 sets the weight of the slack variable $\sigma_i$ of the fixed constraint condition at zero in the evaluation function J. In this manner, the restrictor 25 and the corrector 26 can adjust, that is, enlarge, the restricted range.

$$J = \left(\boldsymbol{u}_{ref} - \boldsymbol{u}\right)^T P\left(\boldsymbol{u}_{ref} - \boldsymbol{u}\right) + \sigma^T Q \sigma \qquad \cdots \quad (8)$$

FIG. 9 is an image illustrating an example of correction of an instruction value u by the corrector 26 in the case of including a fixed constraint condition and a variable constraint condition. In FIG. 9, constraint conditions include the fixed

first constraint condition $R_1$ and the variable second constraint condition $R_2$. The restrictor 25 changes the second constraint condition $R_2$ by adjusting a slack variable $\sigma_2$, and as a result, can change the restricted range.

For example, in cases such as a case where the corrected instruction value u is not appropriate, the restrictor 25 may adjust the variable constraint condition to thereby perform correction of the input instruction value $u_{ref}$ again. By changing the constraint condition, the corrected instruction value u can change as compared to the instruction value u before the constraint condition is changed. This raises the possibility of improvement of the corrected instruction value u.

=Measures against Deadlock=

As a result of correction of the input instruction velocity $u_{ref}$ to fall within the restricted range, the final instruction velocity u becomes substantially zero in some cases. That is, the mover 1 can substantially stop. This state is called a deadlock. In the case of occurrence of a deadlock, the deadlock is eliminated by changing the constraint condition or changing the instruction value u before correction.

Specifically, in a case where the constraint condition is adjustable, the corrector 26 causes the restrictor 25 to change the variable constraint condition. For example, if there is a possibility of a deadlock, the corrector 26 notifies the restrictor 25 of this possibility. The restrictor 25 changes the variable constraint condition and outputs the changed constraint condition to the corrector 26. Since the restricted range changes by changing the constraint condition, the corrected instruction value u can be shifted from zero, that is, can become a value other than zero.

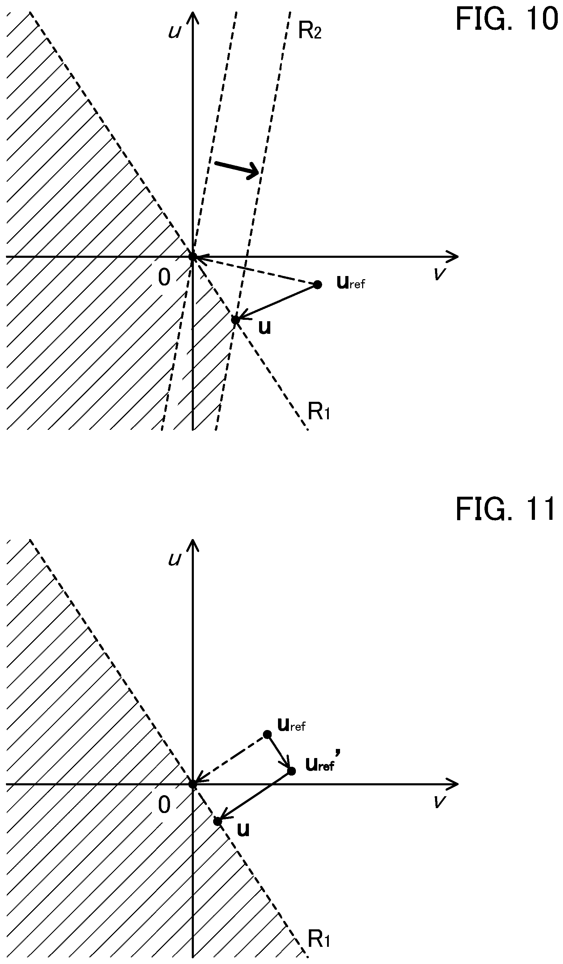

FIG. 10 is an image illustrating an example of correction of an instruction value u by the corrector 26 in the case of changing a constraint condition at occurrence of a deadlock. In the example of FIG. 10, in the case of unchanging the constraint condition, if the corrector 26 corrects the input instruction velocity $u_{ref}$ to fall within the restricted range, the final instruction velocity u becomes zero and a deadlock occurs (see chain double-dashed line). In this case, the corrector 26 causes the restrictor 25 to change the constraint condition. For example, as shown in FIG. 9 above, in the case where a variable constraint condition is set, the restrictor 25 changes the variable constraint condition. In the example of FIG. 10, the restrictor 25 changes the second constraint condition $R_2$. The corrector 26 corrects the input instruction velocity $u_{ref}$ to fall within the restricted range r after the change of the second constraint condition R2. Since the restricted range is changed, the final instruction velocity u is shifted from zero and takes a value other than zero. As a result, the mover 1 is allowed to move without a deadlock.

Alternatively, the corrector 26 preliminarily corrects the input instruction value $u_{ref}$ and then corrects the input instruction value $u_{ref}$ to fall within the restricted range. The corrector 26 preliminarily corrects the input instruction value $u_{ref}$ by a predetermined amount. The predetermined amount of preliminary correction may be changed at every preliminary correction. Alternatively, the predetermined amount may be constant. The preliminary correction of the input instruction value $u_{ref}$ changes a relationship between the input instruction value $u_{ref}$ and the restricted range, and thus, the instruction value u within the restricted range with a minimum correction amount from the input instruction value $u_{ref}$ can change. As a result, the corrected instruction value u can be shifted from zero, that is, can take a value other than zero.

FIG. 11 is an image illustrating an example of correction of an instruction value u by the corrector 26 in the case of performing preliminary correction at occurrence of a deadlock. In the example of FIG. 11, in the absence of preliminary correction, if the corrector 26 corrects the input instruction velocity $u_{ref}$ to fall within the restricted range, the final instruction velocity u becomes zero and a deadlock occurs (see chain double-dashed line). In this case, the corrector 26 first preliminarily corrects the input instruction velocity $u_{ref}$. The corrector 26 corrects the preliminarily corrected input instruction velocity $u_{ref}'$ to fall within the restricted range. The final instruction velocity u is shifted from zero and takes a value other than zero. As a result, the mover 1 is allowed to move without a deadlock.

It should be noted that in the case of occurrence of a deadlock, the corrector 26 may wait in the state of a deadlock. The state of obstacles might change with time, and the constraint condition might change accordingly. In this case, the deadlock is naturally resolved. For example, in a case where a deadlock occurs because of a constraint condition corresponding to another mover, when this mover moves, the constraint condition changes and the possibility of interference with this mover can decrease. In this case, the restricted range is enlarged so that the deadlock is thereby resolved. On the other hand, in a case where the deadlock is not resolved even by taking measures such as a change of the constraint condition, preliminary correction of the input instruction value $u_{ref}$, and waiting as described above, the route generator 21 may generate a route again.

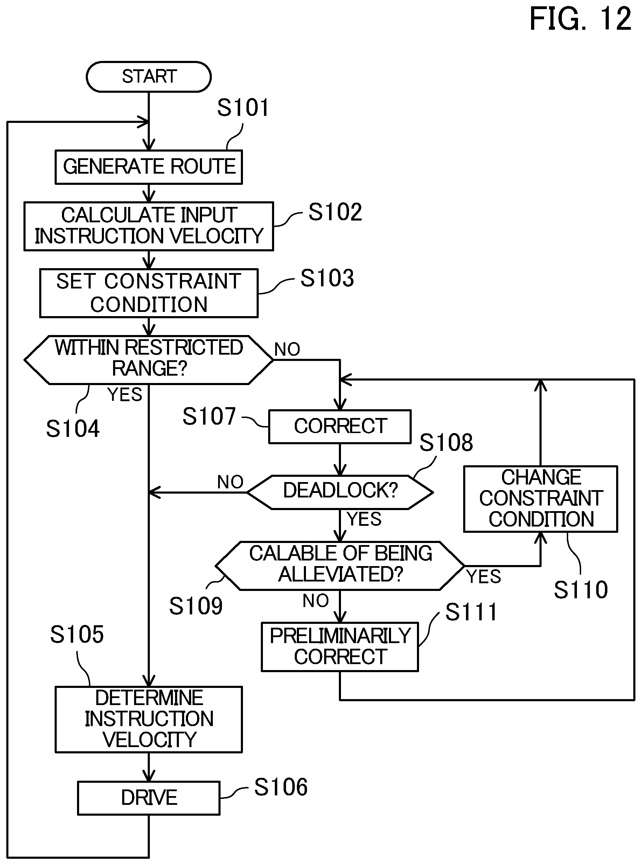

Then, operation of the controller 100 will be described with reference to FIG. 12. FIG. 12 is a flowchart of a restriction process of an instruction value. FIG. 12 is an example of autonomous driving in which an instruction velocity is automatically set.

First, in step S101, the controller 100 generates a route. Specifically, the route generator 21 generates a route from a current position of the mover 1 to a destination by way of a transit point, based on map information, mover information, and other information. In addition, the route generator 21 determines a way point on the route, that is, a target position closest to the current position on the route.

Next, in step S102, the controller 100 calculates an input instruction velocity $u_{ref}$. Specifically, the instruction calculator 23 calculates an input instruction velocity $u_{ref}$ for allowing the mover 1 to move to the target position.

Then, in step S103, the controller 100 sets a constraint condition on an instruction velocity u. Specifically, the restrictor 25 calculates a constraint condition based on mover information and obstacle information. At this time, the restrictor 25 also sets a constraint condition concerning output characteristics.

Thereafter, in step S104, the controller 100 determines whether the input instruction velocity $u_{ref}$ is within a restricted range or not. Specifically, the corrector 26 determines whether an evaluation function J is zero or not with respect to the input instruction velocity $u_{ref}$, by using the evaluation function J and the constraint condition. If the evaluation function J is zero, the corrector 26 determines that the input instruction velocity $u_{ref}$ is within the restricted range.

In a case where the input instruction velocity $u_{ref}$ is included within the restricted range, the controller 100 determines the input instruction velocity $u_{ref}$ as a final instruction velocity u in step S105. If the input instruction velocity $u_{ref}$ is out of the restricted range, the controller 100 corrects the input instruction velocity $u_{ref}$ to fall within the restricted range in step S107. Specifically, the corrector 26 corrects the input instruction velocity $u_{ref}$ to fall within the restricted range, by using the evaluation function J and the constraint condition as described above.

Subsequently, in step S108, the controller 100 determines whether a deadlock occurs by correcting the input instruction velocity $u_{ref}$ or not. Specifically, the corrector 26 determines whether the corrected instruction velocity u is less than a predetermined threshold or not. The threshold is an extremely small value close to zero. If the corrected instruction velocity u is not less than the threshold, the controller 100 determines the corrected instruction velocity u as a final instruction velocity u in step S105.

If the corrected instruction velocity u is less than the threshold, the restrictor 25 determines whether the constraint condition can be alleviated or not in step S109. For example, the restrictor 25 determines whether the constraint condition can be alleviated or not depending on protected portions or the type of obstacles.

If the constraint condition can be alleviated, the corrector 26 alleviates the constraint condition in step S110. Thereafter, in step S107, the corrector 26 corrects the input instruction velocity $u_{ref}$ to fall within the restricted range, and in step S108, determines a deadlock. Since the restricted range is changed by changing the constraint condition, the input instruction velocity $u_{ref}$ can be corrected to a final instruction velocity u different from the velocity in the above correction. As a result, no deadlocks often occur.

On the other hand, if the constraint condition cannot be alleviated, the corrector 26 preliminarily corrects the input instruction velocity $u_{ref}$ in step S111. Subsequently, in step S107, the corrector 26 corrects a preliminarily corrected input instruction velocity $u_{ref}$' to fall within the restricted range, and in step S108, determines a deadlock. Since the input instruction velocity $u_{ref}$ has been preliminarily corrected, the input instruction velocity $u_{ref}$ can be corrected to a final instruction velocity u different from that obtained by the correction above. As a result, no deadlocks often occur.

In the manner described above, step S110 or S111 is performed until the deadlock is resolved. Accordingly, the final instruction velocity u is finally corrected to a value larger than the threshold.

Once the final instruction velocity u has been determined, in step S106, the controller 100 operates the actuator 12 in accordance with the final instruction velocity u and causes the mover 1 to move. Specifically, the servo processor 27 calculates an instruction force in accordance with the final instruction velocity u, and the operation quantity calculator 28 calculates instruction operation quantities of individual actuators 12 based on the instruction force. Thereafter, the actuators 12 operate based on the individual instruction operation quantities. Accordingly, the mover 1 moves toward the target position.

At this time, the controller 100, specifically the notification processor 29, causes the display 16 to display the generated route. The controller 100 causes the display 16 to display the final instruction velocity u as a vector or other forms. In a case where the input instruction velocity $u_{ref}$ is corrected, that is, avoidance of obstacles is performed, the controller 100 notifies a user of correction of the input instruction velocity $u_{ref}$ through at least one of the display 16 or the alarm 17. At this time, the controller 100 may notify the user of specific correction contents such as the presence/absence of a deadlock, alleviation of a constraint condition, or preliminary correction of the input instruction velocity $u_{ref}$ through at least one of the display 16 or the alarm 17.

Through repetition of this process, the mover 1 moves along the route. In this movement, if there is a possibility of interference between the mover 1 and obstacles, the instruction velocity u is immediately restricted to obtain safety.

It should be noted that if the user inputs the input instruction velocity $u_{ref}$ through the inputter 15, instead of steps S101 and S102, manual input through the inputter 15 is performed. Step S103 and process steps subsequent to step S103 are similar those in the case of autonomous driving. Specifically, a constraint condition is set (step S103), it is determined whether an input instruction velocity $u_{ref}$ that has been manually input is within a restricted range or not (step S104), and if the input instruction velocity $u_{ref}$ is out of the restricted range, the input instruction velocity $u_{ref}$ is corrected to fall within the restricted range (step S105). The other processes are performed similarly. That is, even in manual input, if there is a possibility of interference between the mover 1 and obstacles, the instruction velocity u is immediately restricted, and safety is obtained.

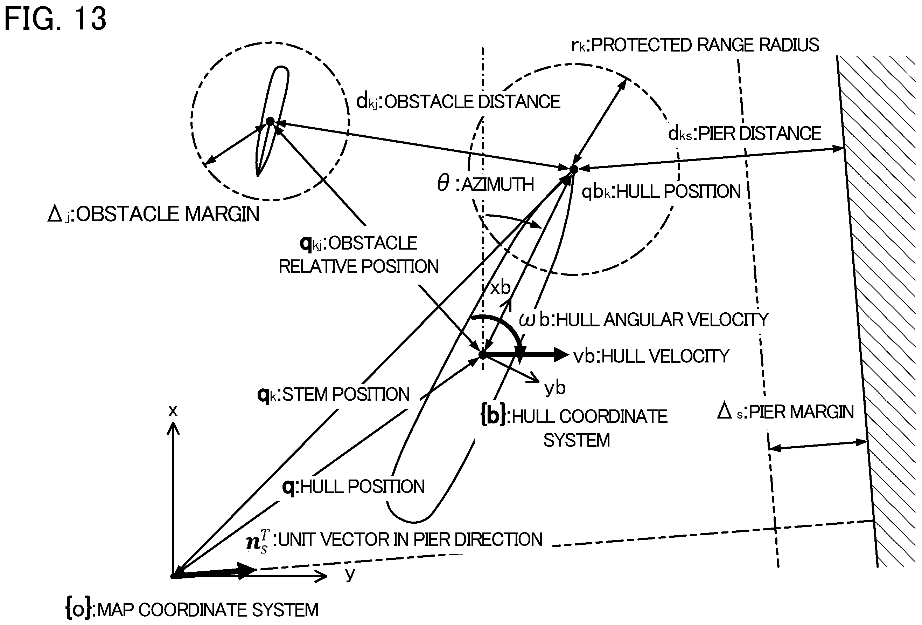

A specific example of autonomous driving by the controller 100 will now be described. FIG. 13 is an illustration of a ship model. In the example of FIG. 13, the mover 1 is a ship.

When a kinematic model of the mover 1 is arranged into an affine form with respect to an instruction velocity u = (u, v, $\gamma$)$^T$, the model is expressed as shown in the equation below, where k is a number used to identify a specific portion in the mover 1.

$$\dot{q}_k = g_k(\theta)\boldsymbol{u} \qquad \cdots \; (9)$$

$$g_k(\theta) = R_\theta D_k, \; \boldsymbol{q}_k = \begin{bmatrix} x_k \\ y_k \\ 0 \end{bmatrix}, \; R_\theta = \begin{bmatrix} \cos\theta & -\sin\theta & 0 \\ \sin\theta & \cos\theta & 0 \\ 0 & 0 & 1 \end{bmatrix}, \; D_k = \begin{bmatrix} 1 & 0 & -q_{kx} \\ 0 & 1 & q_{ky} \\ 0 & 0 & 0 \end{bmatrix} \cdots \; (1\,0)$$

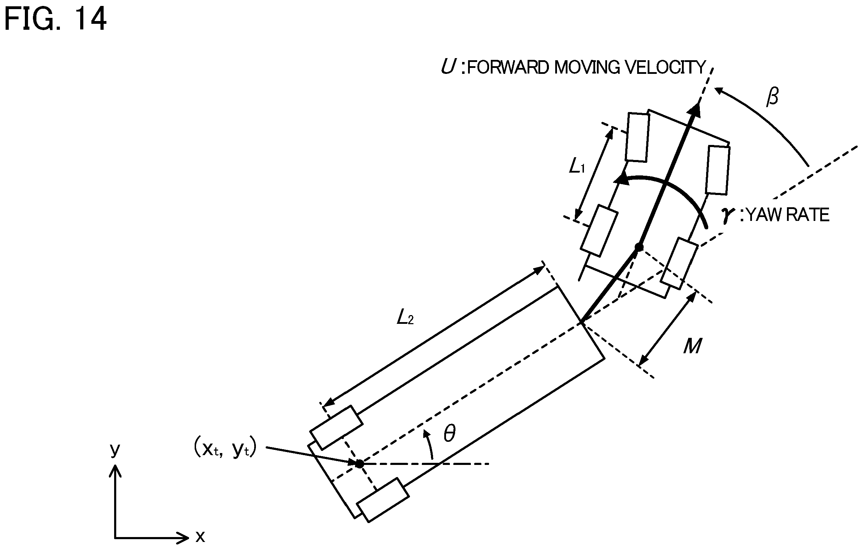

FIG. 14 is an illustration of a vehicle model. In the example of FIG. 14, the mover 1 is a vehicle including a towing vehicle 1A and a towed vehicle 1B. The towed vehicle 1B is swingably coupled to the towing vehicle 1A.

When a kinematic model of a vehicle is arranged in an affine form with respect to an instruction velocity u = (U, $\gamma$)$^T$, the model is expressed as follows:

$$\dot{q} = g(\boldsymbol{q})\boldsymbol{u} \qquad \cdots \; (1\,4)$$

$$g_i(\boldsymbol{q}) = \begin{bmatrix} \cos\beta\cos\theta & M\sin\beta\cos\theta \\ \cos\beta\sin\theta & M\sin\beta\sin\theta \\ \sin\beta/L_2 & -M\cos\beta/L_2 \\ -\sin\beta/L_2 & 1 + M\cos\beta/L_2 \end{bmatrix}, \; \boldsymbol{q} = \begin{pmatrix} x_t \\ y_t \\ \theta \\ \beta \end{pmatrix}, \; \boldsymbol{u} = \begin{pmatrix} U \\ r \end{pmatrix} \qquad \cdots \; (1\,5)$$

where U is a forward moving velocity given to the towing vehicle 1A, $\gamma$ is a yaw rate of the towing vehicle 1A, $\theta$ is an angle of the towed vehicle 1B in a map coordinate system, and $\beta$ is a relative angle of the towing vehicle 1A to the towed vehicle 1B. (xt, $y_t$) represent position coordinates of a protected portion of the towed vehicle 1B in the map coordinate system. L$_1$ is a distance from a coupling point of the towed vehicle 1B to a protected portion in the towing vehicle 1A. L$_2$ is a distance between a protected portion of the towed vehicle 1B to a coupling point of the towing vehicle 1A in the towed vehicle 1B. M is a distance from a coupling point of the towing vehicle 1A to a coupling point of the towed vehicle 1B.

The restrictor 25 uses such a kinematic model to simulate the mover 1, and sets a constraint condition.

For example, in the example of FIG. 13, when the mover 1 docks a pier by autonomous driving, the restrictor 25 sets, as a constraint condition, a condition in which a distance between a protected portion of the mover 1 and an obstacle is larger than a safety distance (i.e., a distance obtained by adding a margin to a required minimum distance). For example, in the example of a ship in FIG. 13, in a case where the protected portion is a stem and an obstacle is a pier, a constraint condition for keeping a safety distance between the stem and the pier is set as follows:

$$h_i = d_{ks}^{\;2} - (\Delta_s + r_k)^2 = (\boldsymbol{n}_s^T \boldsymbol{q}_k - d_{s0})^2 - (\Delta_s + r_k)^2$$

$$= (\text{distance between stem and pier})^2 - (\text{required minimum distance} + \text{margin})^2 \quad (11)$$

Taking the time derivative of Equation (11) results in Equation (12) below:

$$\dot{h}_i(x, x_j, u) = 2\boldsymbol{n}_s^T \dot{\boldsymbol{q}}_k = 2\boldsymbol{n}_s^T g_k(\theta)\boldsymbol{u} \qquad \cdots \; (1\,2)$$

where the right side of Equation (12) is 2 × (unit vector in pier direction) × (Jacobian of kinematics of own ship) × (relative velocity of ship relative to pier).

Based on Equations (11) and (12), a constraint condition on the instruction velocity u is set as follows:

$$A\boldsymbol{u} \le b, \; \begin{cases} A = -2\boldsymbol{n}_s^T g_k(\theta) \\ b = \alpha(h_i) \end{cases} \qquad \cdots \; (1\,3)$$

Under this constraint condition, the corrector 26 can calculate an instruction velocity u for approaching the mover 1 toward the pier with a safety distance kept between the stem and the pier. Finally, the mover 1 reaches a destination, that is, a position of docking. At this time, a distance obtained by adding a margin to a required minimum distance is also kept between the stem and the pier. It should be noted that the restrictor 25 also sets a similar constraint condition for the stern, thereby keeping a safety distance between the stern and the pier. In a case where another ship appears near the mover 1, the restrictor 25 sets a constraint condition on the other ship, for example, a constraint condition of the stem and the other ship, and a constraint condition of the stem and the other ship, thereby also keeping a safety distance between the mover 1 and the other ship.

Furthermore, the restrictor 25 may change the constraint condition in accordance with a movement situation of the mover 1. For example, in the example described above, when the distance between the stem and the pier becomes substantially equal to the safety distance, the mover 1 does not approach the pier any more. Thus, the restrictor 25 alleviates the constraint condition. For example, the restrictor 25 reduces at least one of a protected range radius $r_k$ and a pier margin $\Delta_s$ in the constraint condition. That is, at least one of the required minimum distance or the margin decreases. As a result, the mover 1 can further approach the pier. The restrictor 25 alleviates the constraint condition until the mover 1 reaches the destination to thereby enable the mover 1 to reach the destination. It should be noted that the alleviation of the constraint condition is not limited to a direct change of the constraint condition, and may be achieved such that the corrector 26 changes, for example, reduces, the weight of a corresponding slack variable $\sigma_i$ in an evaluation function J including the variable constraint condition described above.

With the controller 100 described above, in a case where a constraint condition of an instruction value for avoiding obstacles is set, and if the instruction value is out of a restricted range defined by the constraint condition, the instruction value is corrected to fall within the restricted range. That is, the instruction value is restricted to satisfy the constraint condition. Accordingly, the mover 1 moves to the target position while avoiding the obstacles. In the manner described above, since avoidance of obstacles is achieved by restricting the instruction value, no target position or route needs to be generated again. A calculation amount necessary for restricting the instruction value is smaller than that in re-calculation of a target position or a route. That is, the instruction value can be quickly restricted to respond to obstacles immediately.

In addition, since the instruction value is corrected to fall within the restricted range, options for the corrected instruction value have a breadth. In other words, unlike responses such as simply stopping the mover 1 or uniformly redirecting the mover 1 in a fixed direction (e.g., leftward), the mover 1 can respond in a more flexible manner. That is, the mover 1 can continue movement toward the target position although the instruction value is restricted.

In addition, since the constraint conditions are updated sequentially, constraint conditions are set in accordance with the continuously changing mover 1 and a surrounding environment thereof. In other words, the instruction values are not restricted uniformly at any time, but are restricted by constraint conditions that reflect changes in the mover 1 and the surrounding environment thereof.

Further, the controller 100 restricts an instruction velocity as an instruction value. Thus, the controller 100 can achieve calculation of a constraint condition and calculation for correcting the instruction velocity to fall within the restricted range by using a kinematic model of the mover 1. Accordingly, as compared to the case of calculation using a dynamics model of the mover 1, a mathematical expression is simplified and design by a user is eased.

Since the controller 100 restricts the instruction value in a stage preceding to the servo processor 27, influence of disturbance and model errors can be reduced by servo control. For example, if the instruction value is restricted in a stage subsequent to the servo processor 27, the instruction value adjusted to reduce influence of disturbance and others is changed. Consequently, the effect of reducing influence of disturbance and model errors by servo control decreases. By restricting the instruction value in a stage preceding to the servo processor 27, instruction of disturbance and model errors can be appropriately reduced with safety.

The controller 100 can adjust a constraint condition to achieve appropriate movement of the mover 1 by setting a variable constraint condition. For example, if smooth movement of the mover 1 is not achieved, the constraint condition is alleviated to thereby obtain smooth movement of the mover 1.

In the case of occurrence of a deadlock, the controller 100 can resolve the deadlock by changing the constraint condition or preliminarily correcting the input instruction value.

If the instruction value is out of the restricted range, the controller 100 notifies the user of this through at least one of the display 16 or the alarm 17. Accordingly, the user is allowed to know that avoidance of obstacles has been performed. The controller 100 causes the display 16 to display at least one of the route or the instruction value irrespective of whether the instruction value is out of the restricted range or not. Accordingly, the user is allowed to know at least one of the route or the instruction value of the mover 1, irrespective of whether avoidance of obstacles is performed or not.

<<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the mover 1 in the driving assistance system 1000 is not limited to the example described above. For example, the mover 1 is not limited to a vehicle or a ship, and may employ any mover as long as autonomous driving can be performed. The mover 1 may be an autonomous robot (e.g., carrier pallet) or a flying device (e.g., drone), for example.

The number of movers 1 included in the driving assistance system 1000 is not limited to the example in FIG. 1, and may be any number.

The actuator 12 is an actuator concerning movement of the mover 1. The actuator 12 is not limited to an electric motor, an engine, and a steering device. For example, in the case where the mover 1 is a ship, a propeller and a thruster, for example, are actuators. In the case where the mover 1 is a drone, a propeller is an actuator.

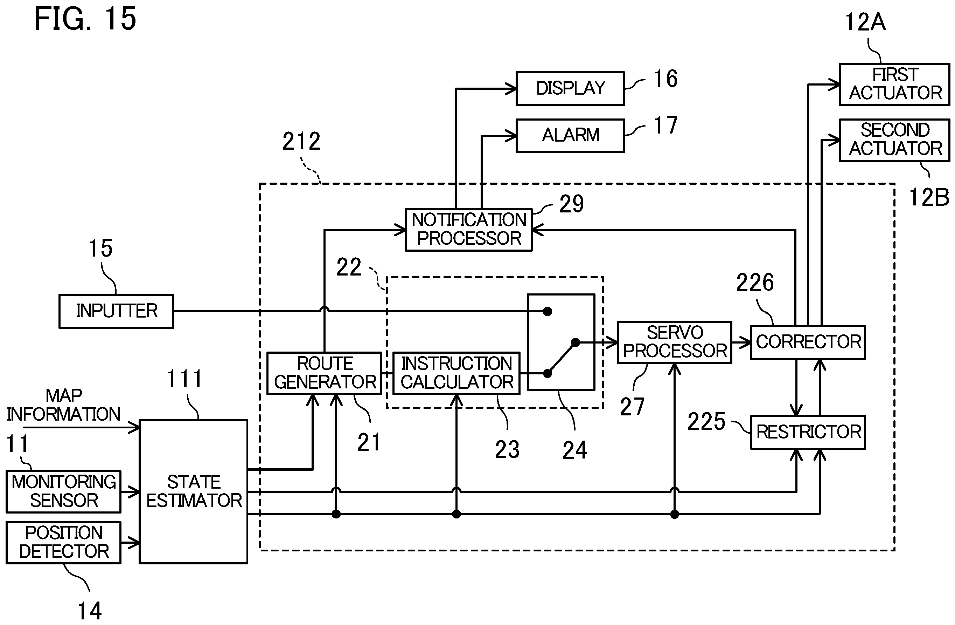

A target restricted by the constraint condition is not limited to the instruction velocity. Any instruction value can be a target of restriction as long as the instruction value is at a stage preceding to the actuator 12. That is, in the foregoing description, the "instruction velocity" can be regarded as "instruction value." For example, the instruction force may be restricted. A detailed functional block of the control calculator 212 in this case is shown in FIG. 15. In the control calculator 212 of FIG. 15, an instruction velocity from the setter 22 is directly input to the servo processor 27. An instruction power output from the servo processor 27 is input to the corrector 226. The corrector 226 corrects the instruction force to fall within a restricted range defined by a constraint condition from the restrictor 225. In this example, the corrector 226 also serves as an operation quantity calculator, and also calculates an instruction operation quantity of the actuator 12. The restrictor 225 uses a dynamics model of the mover 1 and sets a constraint condition of an instruction force to keep a predetermined distance between the mover 1 and obstacles by using a force instruction. For example, if disturbance influence and model errors are small, the instruction value may be restricted in a stage subsequent to the servo control as described above.

The restrictor 25 sets the constraint condition concerning control characteristics and the constraint condition concerning actuator characteristics, but the present disclosure is not limited to this example. Constraint constraints other than a constraint condition concerning safety are not necessary.

The flowchart is merely an example. The steps in the flowchart may be changed, replaced, added, omitted, or the like as appropriate. Further, the order of steps in the flowchart may be changed or serial processing may be performed in parallel. For example, after occurrence of a deadlock has been determined, preliminary correction of an instruction value (step S111) may be performed first without alleviation of a constraint condition (steps S109 and S110). When a deadlock is not resolved by preliminary correction of the instruction value, alleviation of the constraint condition may be performed.

Alternatively, steps S108, S109, S110, and S111 subsequent to the determination of a deadlock may be o mitted. That is, after the instruction value has been corrected in step S107, the corrected instruction value may be determined as an instruction value (step S105) so that the mover 1 is thereby driven (step S106). If a deadlock occurs at this time, the mover 1 can stop. However, a surrounding environment including obstacles changes with time so that a deadlock can be naturally resolved.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized as follows.

[1] A controller 100 that calculates an operation quantity of an actuator 12 to move a mover 1 includes: a setter 22 that sets an instruction value to move the mover 1 to a target position; a restrictor 25 that sets a constraint condition of the instruction value for avoidance of an obstacle; a corrector 26 that corrects the instruction value to fall within a restricted range defined by the constraint condition in a case where the instruction value is out of the restricted range; and an operation quantity calculator 28 that calculates the operation quantity based on the instruction value.

In this configuration, an instruction to move the mover 1 to the target position is provisionally set. At this time, a constraint condition that restricts the instruction value to avoid an obstacle is set. The constraint condition defines the restricted range of the instruction value. If the provisional instruction value is out of the restricted range, the instruction value is corrected to fall within the restricted range. With the operation quantity obtained based on the instruction value, the mover moves toward the target value while avoiding obstacles. At this time, the controller 100 does not need to change the targe position and change the route to avoid obstacles. That is, the controller 100 only needs to restrict the instruction value and does not need to perform calculation for changing the target position or the route. As a result, a calculational load of the controller 100 is reduced so that the instruction value can be thereby quickly restricted to respond to obstacles immediately.

[2] In the controller 100 of [1], the restrictor 25 sequentially calculates the constraint condition and updates the constraint condition.

In this configuration, the constraint condition is not constantly uniform, and is updated in accordance with the continuously changing mover 1 and a surrounding environment thereof. As a result, a restricted range depending on a situation is set so that safety of the mover 1 is thereby appropriately obtained.

[3] The controller 100 of [1] or [2] further includes a servo processor 27 that performs servo control based on an instruction velocity of the mover 1 as the instruction value, and the corrector 26 corrects the instruction velocity to fall within the restricted range and outputs a final instruction velocity to the servo processor 27, the servo processor 27 outputs an instruction force based on the final instruction velocity, and the operation quantity calculator 28 calculates the operation quantity based on the instruction force.

In this configuration, the instruction value is restricted at a stage preceding the servo processor 27m, and thus, the instruction force adjusted by servo control of the servo processor 27 is output without restriction. That is, the instruction force for reducing influence of disturbance and model errors is output. The operation quantity is calculated based on this instruction force, and thus, the mover 1 can be moved stably and accurately.

[4] In the controller 100 of any one of [1] to [3], the restrictor 25 sets a constraint condition concerning control characteristics of the servo processor 27 in addition to the avoidance of the obstacle.

In this configuration, an appropriate operation quantity can also be calculated in consideration of constraint concerning control characteristics of the servo processor 27. Specifically, the servo processor 27 has inherent control characteristics, and does not output an expected instruction force for all the instruction velocities. An instruction force as intended by the instruction velocity is not output in some cases because of constraint concerning control characteristics of the servo processor 27. The restricted range is set in consideration of a constraint condition concerning control characteristics beforehand so that the instruction velocity can be thereby corrected to a range where safety is obtained and the instruction velocity is hardly affected by control characteristics. Accordingly, an instruction force as expected from the instruction velocity is output, and as a result, an operation quantity appropriately corresponding to the instruction velocity is calculated.

[5] In the controller 100 of any one of [1] to [4], the restrictor 25 sets a constraint condition concerning the actuator 12 in addition to the avoidance of the obstacle.

In this configuration, an appropriate thrust can be obtained in consideration of constraint concerning characteristics of the actuator 12. Specifically, the actuator 12 has inherent actuator characteristics, and does not output an expected thrust for all the instruction forces. That is, a thrust expected from the instruction velocity is not output in some cases because of constraint concerning actuator characteristics. The restricted range is set in consideration of a constraint condition concerning actuator characteristics beforehand so that the instruction velocity can be thereby corrected to a range where safety is obtained and the instruction velocity is hardly affected by actuator characteristics. Accordingly, a thrust appropriately corresponding to the instruction velocity can be obtained.

[6] In the controller 100 of any one of [1] to [5], the restrictor 25 sets the constraint condition to keep a predetermined distance between the mover 1 and the obstacle.

In this configuration, the mover 1 is allowed to move toward a target position with the predetermined distance kept between the mover 1 and the obstacle.

[7] In the controller 100 of any one of [1] to [6], the restrictor 25 sets a plurality of constraint conditions respectively corresponding to a plurality of protective portions of the mover 1 such that the plurality of protected portions avoid the obstacle.

In this configuration, while the mover 1 moves to the target position, safety of the protected portions can be obtained.

[8] In the controller 100 of any one of [1] to [7], the restrictor 25 sets the constraint condition to be adjustable.

In this configuration, the restrictor 25 can flexibly change the constraint condition. For example, as a result of correction of the instruction value within the restricted range, the mover 1 cannot move appropriately in some cases. In such cases, the restricted range is changed by adjusting the constraint condition. Then, appropriate movement of the mover 1 can be achieved.

[9] In the controller 100 of any one of [1] to [8], if the corrected instruction value is less than a predetermined threshold, the restrictor 25 changes the constraint condition and the and corrects the corrector 26 corrects the instruction value to fall within the changed restricted range.

In this configuration, in a case where the corrected instruction value is extremely small and appropriate movement of the mover 1 cannot be achieved, the constraint condition is changed. When the constraint condition is changed, the restricted range is changed, and the corrected instruction value can change to be a threshold or more in some cases. That is, a situation where the corrected instruction value is less than the threshold can be resolved by changing the constraint condition.

[10] In the controller 100 of any one of [1] to [9], if the corrected the instruction value is less than a predetermined threshold, the corrector 26 preliminarily corrects the instruction value and corrects the preliminarily corrected instruction value to fall within the restricted range.

In this configuration, in a case where the corrected instruction value is extremely small and appropriate movement of the mover 1 cannot be achieved, the instruction value is preliminarily corrected. When the instruction value is preliminarily corrected, the correction amount for correcting the instruction value to fall within the restricted range also changes. Thus, the corrected instruction value can become the threshold or more in some cases. That is, a situation where the corrected instruction value is less than the threshold can be resolved by preliminarily correcting instruction value.

[11] In the controller 100 of any one of [1] to [10], the setter 22 sets an instruction velocity as the instruction value, and the restrictor 25 calculates the restricted range based on a kinematic model of the mover 1.

In this configuration, the mover 1 is used as a model by using so-called kinematics. Accordingly, the expression is simplified to ease design by a user.

[12] The controller 100 of any one of [1] to [11] further includes a notification processor 29 that notifies a user of correction of the instruction value through a display 16 or an alarm 17 included in the mover 1.

In this configuration, the user is allowed to know correction of the instruction value, and accordingly, the user accurately understands the driving condition of the mover 1. For example, when the user performs override during autonomous driving of the mover 1, the user can refer to the presence/absence of correction of the instruction value.

## Claims

1. A controller that calculates an operation quantity of an actuator to move a mover, the controller comprising:

   a setter that sets an instruction value to move the mover to a target position;
   a restrictor that sets a constraint condition of the instruction value for avoidance of an obstacle;
   a corrector that corrects the instruction value to fall within a restricted range defined by the constraint condition in a case where the instruction value is out of the restricted range; and
   an operation quantity calculator that calculates the operation quantity based on the instruction value.

2. The controller according to claim 1, wherein
   the restrictor sequentially calculates the constraint condition and updates the constraint condition.

3. The controller according to claim 1, further comprising

   a servo processor that performs servo control based on an instruction velocity of the mover as the instruction value, wherein
   the corrector corrects the instruction velocity to fall within the restricted range and outputs a final instruction velocity to the servo processor,
   the servo processor outputs an instruction force based on the final instruction velocity, and
   the operation quantity calculator calculates the operation quantity based on the instruction force.

4. The controller according to claim 3, wherein
   the restrictor sets a constraint condition concerning control characteristics of the servo processor in addition to the avoidance of the obstacle.

5. The controller according to claim 3, wherein
   the restrictor sets a constraint condition concerning the actuator in addition to the avoidance of the obstacle.

6. The controller according to claim 1, wherein
   the restrictor sets the constraint condition to keep a predetermined distance between the mover and the obstacle.

7. The controller according to claim 1, wherein

the restrictor sets a plurality of constraint conditions respectively corresponding to a plurality of protective portions of the mover such that the plurality of protected portions avoid the obstacle.

8. The controller according to claim 1, wherein
the restrictor sets the constraint condition to be adjustable.

9. The controller according to claim 1, wherein
if the corrected instruction value is less than a predetermined threshold,

    the restrictor changes the constraint condition, and
    the corrector corrects the instruction value to fall within the changed restricted range.

10. The controller according to claim 1, wherein
if the corrected instruction value is less than a predetermined threshold, the corrector preliminarily corrects the instruction value and corrects the preliminarily corrected instruction value to fall within the restricted range.

11. The controller according to claim 1, wherein

    the setter sets an instruction velocity as the instruction value, and
    the restrictor sets the constraint condition based on a kinematic model of the mover.

12. The controller according to claim 1, further comprising
a notification processor that notifies a user of correction of the instruction value through a display or an alarm included in the mover.

FIG. 1

EP 4 571 431 A1

FIG. 2

1

11 MONITORING SENSOR

12 ACTUATOR

13 COMMUNICATOR

14 POSITION DETECTOR

15 INPUTTER

16 DISPLAY

100 CONTROLLER

FIG. 3

100

18 PROCESSOR

19 STORAGE

110 MEMORY

FIG. 4

18

111 STATE ESTIMATOR

112 CONTROL CALCULATOR

# FIG. 5

EP 4 571 431 A1

FIG. 6

FIG. 7

FIG. 8

FIG. 9

FIG. 10

FIG. 11

FIG. 12

START

S101

GENERATE ROUTE

CALCULATE INPUT
INSTRUCTION VELOCITY — S102

SET CONSTRAINT
CONDITION — S103

WITHIN RESTRICTED
RANGE? — NO

YES

S104

CORRECT — S107

NO — DEADLOCK? — S108

YES

CALABLE OF BEING
ALLEVIATED? — YES

CHANGE
CONSTRAINT
CONDITION

S109 — NO

S110

PRELIMINARILY
CORRECT — S111

S105

DETERMINE
INSTRUCTION
VELOCITY

DRIVE — S106

# FIG. 13

rk:PROTECTED RANGE RADIUS

dkj:OBSTACLE DISTANCE

dks:PIER DISTANCE

Δj:OBSTACLE MARGIN

θ :AZIMUTH

qbk:HULL POSITION

**q**kj:OBSTACLE RELATIVE POSITION

xb

ωb:HULL ANGULAR VELOCITY

vb:HULL VELOCITY

yb

**q**k:STEM POSITION

{b}:HULL COORDINATE SYSTEM

Δs:PIER MARGIN

x

**q**:HULL POSITION

$\boldsymbol{n}_s^T$:UNIT VECTOR IN PIER DIRECTION

y

{o}:MAP COORDINATE SYSTEM

EP 4 571 431 A1

FIG. 14

$U$ : FORWARD MOVING VELOCITY

$\beta$

$L_1$

$\gamma$ : YAW RATE

$L_2$

$M$

$(x_t, y_t)$

$\theta$

$y$

$x$

EP 4 571 431 A1

FIG. 15

EP 4 571 431 A1

# EP 4 571 431 A1

## INTERNATIONAL SEARCH REPORT

| International application No. |
| --- |
| **PCT/JP2023/028799** |

| A. | CLASSIFICATION OF SUBJECT MATTER |
| --- | --- |

*G05B 11/36*(2006.01)i; *G05D 1/02*(2020.01)i; *G08G 1/16*(2006.01)i
FI:   G05B11/36 505Z; G05B11/36 G; G05D1/02 H; G08G1/16 A

According to International Patent Classification (IPC) or to both national classification and IPC

| B. | FIELDS SEARCHED |
| --- | --- |

Minimum documentation searched (classification system followed by classification symbols)

G05B11/36; G05D1/02; G08G1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112506194 A (UNIVERSITY OF SUN YAT SEN) 16 March 2021 (2021-03-16) | 1-3, 6, 8, 11-12 |
| Y | paragraphs [0032], [0036]-[0038], [0045], [0047], [0053], fig. 1, 2 | 4-5, 7, 9-10 |
| Y | JP 2020-35182 A (TOYOTA JIDOSHA KABUSHIKI KAISHA) 05 March 2020 (2020-03-05) paragraphs [0034], [0035] | 4-5 |
| Y | JP 2010-173616 A (NISSAN MOTOR CO., LTD.) 12 August 2010 (2010-08-12) paragraphs [0089]-[0101] | 7 |
| Y | WO 2016/080555 A1 (KOMATSU LTD.) 26 May 2016 (2016-05-26) paragraphs [0018], [0066], [0086], [0091] | 9-10 |
| A | WO 2014/141351 A1 (HITACHI, LTD.) 18 September 2014 (2014-09-18) entire text, all drawings | 1-11 |

☐ Further documents are listed in the continuation of Box C.          ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **19 September 2023** | **03 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**27**

# EP 4 571 431 A1

## INTERNATIONAL SEARCH REPORT
### Information on patent family members

International application No.

**PCT/JP2023/028799**

| Patent document cited in search report | | | Publication date (day/month/year) | Patent family member(s) | | | Publication date (day/month/year) |
|---|---|---|---|---|---|---|---|
| CN | 112506194 | A | 16 March 2021 | (Family: none) | | | |
| JP | 2020-35182 | A | 05 March 2020 | US | 2020/0072146 | A1 | |
| | | | | paragraphs [0062]-[0064] | | | |
| | | | | EP | 3617905 | A1 | |
| | | | | CN | 110872992 | A | |
| | | | | KR | 10-2020-0026050 | A | |
| | | | | BR | 102019016847 | A2 | |
| | | | | RU | 2719355 | C1 | |
| JP | 2010-173616 | A | 12 August 2010 | (Family: none) | | | |
| WO | 2016/080555 | A1 | 26 May 2016 | US | 2017/0151946 | A1 | |
| | | | | paragraphs [0026], [0079], [0080], [0103], [0108] | | | |
| | | | | CN | 105814618 | A | |
| | | | | CA | 2946272 | A1 | |
| WO | 2014/141351 | A1 | 18 September 2014 | US | 2015/0309485 | A1 | |
| | | | | entire text, all drawings | | | |
| | | | | EP | 2975481 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11161501 B